(19) **Europäisches Patentamt**
**European Patent Office**
**Office européen des brevets**

(11) **EP 3 073 695 B1**

(12) **FASCICULE DE BREVET EUROPEEN**

(45) Date de publication et mention de la délivrance du brevet:
**24.01.2018 Bulletin 2018/04**

(51) Int Cl.:
**H04L 27/26** *(2006.01)* **H04B 3/54** *(2006.01)*
**H04L 25/03** *(2006.01)* **H04L 25/06** *(2006.01)*

(21) Numéro de dépôt: **15190536.1**

(22) Date de dépôt: **20.10.2015**

(54) **PROCÉDÉ DE TRAITEMENT D'UN SIGNAL ANALOGIQUE ISSU D'UN CANAL DE TRANSMISSION, EN PARTICULIER UN SIGNAL VEHICULÉ PAR COURANT PORTEUR EN LIGNE**

**VERFAHREN ZUM VERARBEITEN EINES ANALOGSIGNALS AUS EINEM ÜBERTRAGUNGSKANAL, INSBESONDERE EINES SIGNALS TRANSMITTIERT DURCH POWERLINE COMMUNICATION**

**METHOD FOR PROCESSING AN ANALOG SIGNAL COMING FROM A TRANSMISSION CHANNEL, IN PARTICULAR A SIGNAL TRANSMITTED THROUGH POWERLINE COMMUNICATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2015 FR 1552588**

(43) Date de publication de la demande:
**28.09.2016 Bulletin 2016/39**

(73) Titulaire: **STMicroelectronics (Rousset) SAS**
**13790 Rousset (FR)**

(72) Inventeurs:
• **WALLIS, Mark**
**06370 Mouans-Sartoux (FR)**
• **BOUVET, Yoann**
**06650 Opio (FR)**
• **DEMAJ, Pierre**
**06200 Nice (FR)**

(74) Mandataire: **Casalonga**
**Casalonga & Partners**
**Bayerstraße 71/73**
**80335 München (DE)**

(56) Documents cités:
**US-A1- 2003 063 596**

• **Brian Michael Donlan: "Ultra-wideband Narrowband Interference Cancellation and Channel Modeling for Communications", , 7 mars 2005 (2005-03-07), XP055216991, Extrait de l'Internet: URL:http://hdl.handle.net/10919/31222**

## Description

Des modes de mise en oeuvre et de réalisation de l'invention concernent la transmission d'informations sur un canal de communication, et notamment lorsque ce canal est une ligne électrique, la transmission d'informations par courant porteur en ligne (PLC : Power Line Communications), et plus particulièrement l'amélioration du traitement d'un tel signal en réception lorsque celui-ci est bruité par un signal de bruit bande étroite (Narrow Band Interferer).

Des modes de mise en oeuvre et de réalisation de l'invention sont compatibles avec les différentes normes régissant la communication par courant porteur en ligne, notamment mais non exclusivement les normes PLC-G3, PRIME (PoweRline Intelligent Metering Evolution) ou encore la norme IEEE 1901-2.

La technologie de courant porteur en ligne vise à transmettre des données numériques en exploitant l'infrastructure existante du réseau électrique. Elle permet notamment le relevé à distance de compteurs électriques, les échanges entre véhicules électriques et les bornes de recharge ou encore la gestion et le contrôle des réseaux d'énergie (smart grid)

La technologie de courant porteur en ligne (PLC) incorpore notamment la communication par courant porteur en ligne bande étroite (Narrow band Power line Communication : N-PLC) qui est généralement définie comme une communication sur une ligne électrique opérant à des fréquences de transmission jusqu'à 500 KHz.

La communication N-PLC utilise ainsi généralement les bandes de fréquences définies notamment par le comité européen de normalisation électrotechnique (CENELEC) ou par la Commission Fédérale des Communications (FCC).

Ainsi si l'on considère la bande de fréquences CENELEC A (3-95 kHz), les fréquences de transmission se situent entre 42 et 89 KHz dans la norme PRIME tandis qu'elles se situent entre 35 et 91 KHz pour la norme PLC-G3.

Dans de telles bandes de fréquences, les câbles électriques véhiculant les signaux par courant porteur en ligne sont dans un environnement très dur. Ils sont sujets notamment à des perturbations du type bruit blanc, bruit coloré ou impulsion de bruit. En outre, ils ne sont protégés contre aucune interférence. De ce fait, tout signal radio FM/AM ou toute communication sans fil peut conduire à la présence d'harmoniques de ces signaux dans la bande fréquentielle utile utilisée par les communications PLC bande étroite.

Par ailleurs, les propriétés et caractéristiques des réseaux électriques ne sont pas connues a priori et sont variables dans le temps. Ainsi, une interférence peut être créée sur une ligne électrique lorsqu'un utilisateur branche n'importe quel dispositif comme par exemple un sèche-cheveux ou une machine à laver. Il en résulte alors une propagation de forts harmoniques fréquentiels qui peuvent se situer également dans la bande utile des communications PLC.

Et, de tels signaux de bruit, qui sont généralement des signaux de bruit bande étroite (Narrow Band Interferer) c'est-à-dire présentant une bande fréquentielle plus faible que la bande fréquentielle du signal utile, perturbent alors la phase de synchronisation du récepteur connecté sur la ligne électrique, au cours de laquelle le récepteur doit pouvoir se synchroniser pour retrouver notamment le début des données utiles de la trame de symboles véhiculés par le signal utile. Dans le document US2003/063596, l'interférence dans le signal reçu est éliminée avant la démodulation en déterminant des paramètres d'un filtre de blanchissement temporellement variable. A cet égard, un algorithme SAIR est utilisé qui modélise le bruit et l'interférence comme un procédé auto régressif de vecteurs de façon à déterminer une matrice de filtrage de blanchissement du type FIR.

La thèse de Brian Michael Donlan intitulée « Ultra-wideband Narrowband Interference Cancellation and Channel Modeling for Communications », 31 janvier 2005, Blacksburg, Virginia, décrit différentes techniques pour supprimer des signaux de bruit bande étroite d'un signal à bande ultra large (UWB) en particulier dans le contexte de l'étalement de spectre (Spread Spectrum).

Les techniques mentionnées dans ce document utilisent pour certaines d'entre elles, des filtres prédictifs de façon à estimer le signal de bruit avant de le soustraire au signal reçu.

Les signaux évoqués dans ce document présentent des caractéristiques très différentes des signaux utilisés dans les communications par courant porteur en ligne. En effet, les signaux UWB, (et en particulier ceux à étalement de spectre par séquence directe) présentent un étalement de la puissance du signal transmis sur une large bande de fréquences afin de noyer cette puissance dans le bruit ambiant ou dans les autres communications. Ainsi, la densité spectrale de puissance (PSD : Power Spectral Density) d'un signal UWB est généralement définie comme étant inférieure à -41 dBm/MHz.

Les signaux utilisés dans les communications PLC sont des signaux modulés selon une modulation multiporteuse, par exemple une modulation en quadrature sur des porteuses orthogonales (modulation OFDM : « Orthogonal Frequency Division Multiplexing », selon une dénomination anglosaxonne couramment utilisée par l'homme du métier), mais utilisant seulement un sous-ensemble de porteuses parmi un ensemble plus grand de porteuses disponibles.

Ainsi par exemple si l'on considère la bande de fréquences CENELEC A, la taille de la transformée de Fourier inverse et de la transformée de Fourier directe est égale à 512, tandis que seules 97 sous-porteuses (les sous-porteuses 86 à 182) sont utilisées pour la transmission dans la norme PRIME.

Si l'on considère la bande de fréquences CENELEC A, la taille de la transformée de Fourier inverse et de la transformée de Fourier directe est égale à 256 alors que seules 36 sous-porteuses (les sous-porteuses 23 à 58) sont utilisées dans la norme PLC-G3.

Par ailleurs, il est important, lors de la phase de synchronisation, de ne rater aucun symbole provenant du canal même lorsque celui-ci est bruité.

Selon un mode de mise en oeuvre et de réalisation, il est proposé un traitement d'un signal analogique issu du canal de transmission qui permette d'améliorer les performances de la phase de synchronisation que le signal analogique utile soit bruité ou non par au moins un signal de bruit bande étroite.

Selon un autre mode de mise en oeuvre et de réalisation, il est proposé d'améliorer également les performances du décodage de la partie restante de la trame après synchronisation.

Selon un mode de mise en oeuvre et de réalisation, pour faciliter la synchronisation du récepteur, notamment lorsque le signal utile est bruité par au moins un signal de bruit bande étroite, on détermine à la volée dans le domaine temporel des coefficients d'un filtre prédictif d'un modèle autorégressif du signal et l'on filtre à la volée le signal dans le domaine temporel par un filtre numérique à réponse impulsionnelle finie (FIR : Finite Impulse Response) dont les coefficients sont ceux du filtre prédictif.

Ceci se distingue donc des méthodes de filtrage de l'art antérieur dans lesquelles on estime le signal de bruit avant de le soustraire du signal issu du canal, ce qui nécessite une synchronisation parfaite, à la fois en temps et en phase, et ce qui est difficile à réaliser en pratique, notamment dans le cas d'une phase de synchronisation où il est important d'une part de ne perdre aucun symbole et d'autre part de ne pas introduire des erreurs de phase.

Selon ce mode de mise en oeuvre et de réalisation, au lieu d'estimer puis de soustraire le signal de bruit estimé, on filtre le signal global issu du canal, que ce signal contienne ou non le signal de bruit, ce qui permet d'effectuer un traitement non cohérent c'est-à-dire ne nécessitant pas une synchronisation parfaite en temps et en phase entre le moment où l'on estime le signal de bruit et le moment où l'on soustrait ce signal de bruit du signal global.

Le récepteur va pouvoir ainsi se synchroniser à partir du signal filtré et d'un signal de référence, par exemple un symbole connu.

Selon un aspect il est donc proposé un procédé de traitement d'un signal analogique de canal issu d'un canal de transmission, par exemple une ligne électrique.

Le signal analogique de canal est susceptible de comporter un signal utile modulé sur un sous-ensemble d'un ensemble de porteuses disponibles, comme par exemple les signaux utiles conformes aux normes PRIME ou G3-PLC.

Ce signal utile véhicule au moins une trame de symboles selon une structure de trame et ce signal utile est éventuellement bruité par au moins un signal de bruit en bande étroite.

En général, le signal de bruit est un pic de bruit à une fréquence unique contenue dans la bande de fréquences du signal utile, mais de façon plus générale, un signal de bruit en bande étroite est un signal de bruit dont la bande de fréquences est inférieure à la bande de fréquences du signal utile.

Ainsi, le signal analogique de canal peut tout à fait à un instant donné ne comporter aucun signal utile ou bien comporter uniquement au moins un signal de bruit, ou bien un signal utile non bruité ou encore un signal utile bruité.

Le procédé selon cet aspect comprend alors une conversion analogique numérique du signal analogique de canal et un traitement de synchronisation comportant un traitement de filtrage.

Le signal analogique de canal qui va subir la conversion analogique/numérique peut être par exemple le signal analogique directement issu du canal ou bien comme c'est généralement le cas, le signal analogique délivré par un étage d'entrée analogique (comportant notamment des filtres passe-bande, des filtres passe-bas et un amplificateur) connecté sur le canal de transmission.

Le traitement de filtrage inclut une détermination à la volée dans le domaine temporel d'un nombre limité de coefficients d'un filtre prédictif d'un modèle autorégressif d'un signal numérique de canal issu de ladite conversion analogique/numérique et un filtrage à la volée du signal numérique de canal dans le domaine temporel par un filtre numérique à réponse impulsionnelle finie dont les coefficients sont ceux du filtre prédictif.

Le signal numérique de canal sur lequel on effectue le traitement de filtrage n'est pas nécessairement le signal numérique directement issu de la conversion analogique/numérique mais peut être par exemple le signal numérique issu de la conversion analogique/numérique et ayant subi éventuellement un sous-échantillonnage.

Les signaux modulés sur un sous-ensemble de porteuses parmi un ensemble de porteuses disponibles ont des caractéristiques totalement différentes des signaux UWB ou à spectre fréquentiel étalé. Ils présentent en effet notamment un niveau de puissance bien supérieur à celui d'un signal UWB ou à spectre fréquentiel étalé et il est alors préférable de prendre des précautions au niveau du filtrage de façon à éviter de filtrer totalement le signal utile en l'absence d'un bruit bande étroite.

En effet, compte tenu notamment du fait que seules quelques porteuses sont utilisées pour la modulation parmi l'ensemble disponible de porteuses (taille de la transformée de Fourier inverse ou directe) il convient préférentiellement de limiter le nombre de coefficients du filtre de façon à éviter d'avoir une trop forte atténuation du signal utile en l'absence de signal de bruit.

En d'autres termes, le nombre de coefficients du filtre est avantageusement inférieur ou égal à un nombre limite qui est choisi de façon à former un filtre à réponse impulsionnelle finie dont la réponse fréquentielle comporte, en présence du signal de bruit, une encoche au niveau de la bande fréquentielle du signal de bruit, et dont la réponse fréquentielle possède, en l'absence de signal de bruit, un profil relativement plat dans la bande de fréquences du signal utile de façon à autoriser une atténuation du signal utile inférieure à une valeur choisie, par exemple 6 dB, qui dépend bien entendu de l'application envisagée.

Le nombre de coefficients sera par ailleurs préférentiellement égal à ce nombre limite de façon à prendre plus facilement en compte éventuellement plusieurs signaux de bruits bande étroite à des tons différents.

L'homme du métier saura adapter le nombre limite de coefficients en fonction de l'application envisagée et des caractéristiques souhaitées pour l'atténuation maximale acceptable du signal utile en l'absence de signal de bruit.

Cela étant, les inventeurs ont observé que lorsque chaque symbole comprend un préfixe cyclique, le nombre limite acceptable de coefficients du filtre est de l'ordre de trois quarts, et préférentiellement de la moitié, de la longueur du préfixe cyclique exprimé en nombre d'échantillons.

On rappelle ici que le préfixe cyclique permet principalement d'éliminer les interférences inter-symboles et est une technique qui consiste à recopier une partie d'un symbole pour le placer en amont de ce symbole.

En pratique, les pôles du filtre prédictif issu du modèle autorégressif du signal deviennent les zéros du filtre à réponse impulsionnelle finie. Aussi, le filtre FIR ne peut qu'atténuer les fréquences correspondant à ces zéros.

Aussi, de façon à limiter encore l'atténuation du signal utile lors du filtrage, il est avantageux que les coefficients du filtre prédictif soient calculés à une fréquence de calcul comprise entre 2 et 5 fois, et préférentiellement entre 2 et 3 fois, la fréquence maximale du signal numérique de canal.

Ceci permet que le signal utile soit alors considéré pour le filtre comme en quelque sorte un bruit blanc par rapport au signal de bruit, ce qui ne serait pas le cas si la fréquence de calcul était beaucoup plus élevée que la fréquence maximale du signal numérique de canal.

La détermination des coefficients du filtre et le filtrage proprement dit sont effectués dans le domaine temporel et à la volée c'est-à-dire au fur et à mesure de l'arrivée du signal analogique de canal. Ceci permet de ne pas rater de symbole que le signal soit bruité ou non.

Le procédé selon cet aspect comporte également une détection d'au moins une indication permettant d'identifier au moins un endroit de ladite structure de trame, à partir du signal numérique de canal filtré et d'un signal de référence.

Ladite indication peut être par exemple la reconnaissance d'un symbole connu du préambule d'une trame et le signal de référence peut être ce symbole connu, la détection s'opérant alors par exemple par des opérations de corrélation glissante.

Selon un mode de mise en oeuvre, ladite détermination à la volée desdits coefficients et ledit filtrage à la volée comprennent un regroupement des échantillons dudit signal numérique en groupes successifs d'échantillons, une détermination d'un bloc courant de coefficients en utilisant le groupe courant d'échantillons, et une application sur ledit groupe courant du filtre à réponse impulsionnelle finie ayant ledit bloc courant de coefficients de façon à obtenir un groupe courant filtré d'échantillons.

Selon un mode de mise en oeuvre, chaque trame comprend un préambule comportant des symboles connus et précédant la partie restante de la trame, et le traitement de filtrage est appliqué au moins pour détecter ladite au moins une indication au niveau du préambule d'au moins une trame.

Lorsque la transmission est totalement asynchrone, c'est-à-dire que le récepteur ne connaît pas l'écart temporel entre des trames successives, il est particulièrement avantageux que les traitements de filtrage soient appliqués au moins pour détecter ladite indication au niveau du préambule de chaque trame.

Au niveau du signal numérique filtré, on ne peut pas savoir si ce signal filtré résulte d'un signal utile bruité ou d'un signal utile non bruité. Aussi, est-il particulièrement avantageux d'effectuer après la détection de ladite indication, une vérification de la présence ou de l'absence du signal de bruit, par exemple à partir d'au moins un symbole connu du signal utile non filtré. En effet, ceci va permettre d'améliorer le traitement des symboles ultérieurs de la trame.

Cette vérification peut comprendre un traitement de transformée de Fourier directe sur ledit symbole connu non filtré et une analyse de la puissance de chaque porteuse.

Cette vérification est par exemple effectuée sur au moins un symbole du préambule.

Et, en cas d'absence du signal de bruit, le traitement de la partie restante de la trame est avantageusement effectué sur le signal numérique de canal non filtré, ce qui permet d'effectuer le décodage des symboles de la partie restante de la trame sur un signal non filtré c'est-à-dire non atténué.

Par contre, en présence du signal de bruit, le traitement de la partie restante de la trame va être effectué sur le signal numérique de canal filtré.

Ce traitement de la partie restante comporte un traitement de transformée de Fourier directe, un traitement de démapage fournissant pour chaque porteuse une valeur du coefficient de modulation (chaque symbole comporte des coefficients de modulation, ou « bins », respectivement associés aux porteuses) et une détermination pour chaque coefficient de modulation d'une indication de confiance (soft décision) de ladite valeur. Il est alors particulièrement avantageux de forcer à zéro les indications de confiance des coefficients de modulation associés aux porteuses dont les fréquences correspondent à celles du signal de bruit.

Ceci permet d'améliorer les performances du décodage notamment lorsqu'un couple désentrelaceur-décodeur de type Viterbi (ou tout autre décodeur basé sur des décisions douces (soft décisions) est utilisé.

Il est également préférable, pour ne pas perturber trop le décodage, de geler les valeurs des coefficients du filtre lors du traitement de la partie restante de la trame.

Selon un autre aspect, il est proposé un récepteur, comprenant

un étage d'entrée destiné à être connecté sur un canal de transmission et configuré pour délivrer un signal analogique de canal issu du canal de transmission, le signal analogique de canal étant susceptible de comporter un signal utile modulé sur un sous-ensemble d'un ensemble de porteuses disponibles, véhiculant au moins une trame de symboles selon une structure de trame et éventuellement bruité par au moins un signal de bruit en bande étroite,

un étage de conversion analogique/numérique pour effectuer une conversion analogique/numérique du signal analogique de canal, et

un étage de traitement comportant des moyens de filtrage incluant un module de calcul configuré pour déterminer à la volée un nombre limité de coefficients d'un filtre prédictif d'un modèle auto régressif d'un signal numérique de canal issu de l'étage de conversion analogique/numérique, un filtre numérique à réponse impulsionnelle finie dont les coefficients sont ceux du filtre prédictif, pour effectuer un filtrage à la volée du signal numérique de canal dans le domaine temporel et des moyens de détection configurés pour détecter au moins une indication permettant d'identifier au moins un endroit de ladite structure de trame, à partir du signal numérique filtré et d'un signal de référence.

Selon un mode de réalisation, chaque symbole comprend un préfixe cyclique et le nombre de coefficients du filtre est inférieur ou égal à un nombre limite qui de l'ordre de trois quarts, préférentiellement de l'ordre de la moitié, de la longueur du préfixe cyclique exprimée en nombre d'échantillons.

Selon un mode de réalisation, le module de calcul est configuré pour calculer les coefficients du filtre prédictif à une fréquence de calcul comprise entre 2 et 5 fois, préférentiellement entre 2 et 3 fois, la fréquence maximale dudit signal numérique de canal.

Selon un mode de réalisation, l'étage de traitement comprend des moyens de regroupement configurés pour regrouper des échantillons dudit signal numérique de canal en groupes successifs d'échantillons, le module de calcul est configuré pour déterminer un bloc courant de coefficients en utilisant le groupe courant d'échantillons, et le filtre numérique est configuré pour recevoir en entrée ledit groupe courant d'échantillons de façon à délivrer un groupe courant filtré d'échantillons.

Selon un mode de réalisation, chaque trame comprend un préambule comportant des symboles connus et précédant la partie restante de la trame, et l'étage de traitement comporte des moyens de commande configurés pour délivrer ledit signal numérique de canal aux moyens de filtrage au moins pour que les moyens de détection détectent ladite au moins une indication au niveau du préambule d'au moins une trame.

Selon un mode de réalisation, les moyens de commande sont configurés pour délivrer ledit signal numérique de canal aux moyens de filtrage au moins pour que les moyens de détection détectent ladite au moins une indication au niveau du préambule de chaque trame.

Selon un mode de réalisation, le récepteur comprend en outre des moyens de vérification configurés pour effectuer après la détection de ladite au moins une indication, une vérification de la présence ou de l'absence dudit signal de bruit à partir d'au moins un symbole du signal utile non filtré.

Selon un mode de réalisation, les moyens de vérification comportent un étage de transformée de Fourier directe configuré pour effectuer un traitement de transformée de Fourier directe sur ledit au moins un symbole et des moyens d'analyse configurés pour effectuer une analyse de la puissance de chaque porteuse.

Selon un mode de réalisation, les moyens de vérification sont configurés pour effectuer ladite vérification sur au moins un symbole du préambule.

Selon un mode de réalisation, l'étage de traitement comprend en outre des moyens de traitement supplémentaires configurés pour effectuer un traitement de ladite partie restante de chaque trame et en cas d'absence du signal de bruit, les moyens de commande sont configurés pour délivrer ladite partie restante de la trame directement aux moyens de traitement supplémentaires sans passer par les moyens de filtrage.

Selon un mode de réalisation, chaque symbole comportant des coefficients de modulation respectivement associés aux porteuses, les moyens de traitement supplémentaires comportent un étage de transformée de Fourier directe, un moyen de démapage fournissant pour chaque porteuse une valeur dudit coefficient de modulation et un module apte à déterminer pour chaque coefficient de modulation une indication de confiance de ladite valeur, et des moyens de forçage configurés pour, en cas de présence dudit signal de bruit, forcer à zéro les indications de confiance des coefficients de modulation associés aux porteuses dont les fréquences correspondent à celles du signal de bruit.

Selon un mode de réalisation, les moyens de commande sont configurés pour désactiver le module de calcul des coefficients du filtre lors du traitement de ladite partie restante de la trame (gel des coefficients du filtre).

Selon un mode de réalisation, le signal utile est un signal modulé selon une modulation OFDM.

Par ailleurs, le canal de transmission peut être une ligne électrique, le signal utile étant alors un signal véhiculé par courant porteur en ligne.

Selon encore un autre aspect, il est proposé, indépendamment d'une application à une synchronisation, un procédé de filtrage d'un signal analogique de canal issu d'un canal de transmission, le signal analogique de canal étant susceptible de comporter un signal utile, par exemple modulé sur un sous-ensemble d'un ensemble de porteuses disponibles, et éventuellement bruité par au moins un signal de bruit en bande étroite, le procédé comprenant une conversion analogique/numérique du signal analogique de canal et un traitement de filtrage incluant une détermination à la volée dans le domaine temporel de coefficients d'un filtre prédictif d'un modèle auto régressif d'un signal numérique de canal issu de ladite conversion analogique/numérique et un filtrage à la volée du signal numérique de canal dans le domaine temporel par un filtre numérique à réponse impulsionnelle finie dont les coefficients sont ceux du filtre prédictif.

Le nombre de coefficients est avantageusement limité comme indiqué ci-avant et/ou les coefficients du filtre prédictif sont calculés à une fréquence de calcul comprise entre 2 et 5 fois, préférentiellement entre 2 et 3 fois, la fréquence maximale du signal numérique de canal.

Selon encore un autre aspect, il est proposé un récepteur destiné à être connecté sur le canal de transmission et comportant des moyens, tels que ceux définis ci-avant, configurés pour mettre en oeuvre un tel procédé de filtrage.

D'autres avantages et caractéristiques de l'invention apparaîtront à l'examen de la description détaillée de modes de mise en oeuvre et de réalisation de l'invention, nullement limitatifs, et des dessins annexés sur lesquels :

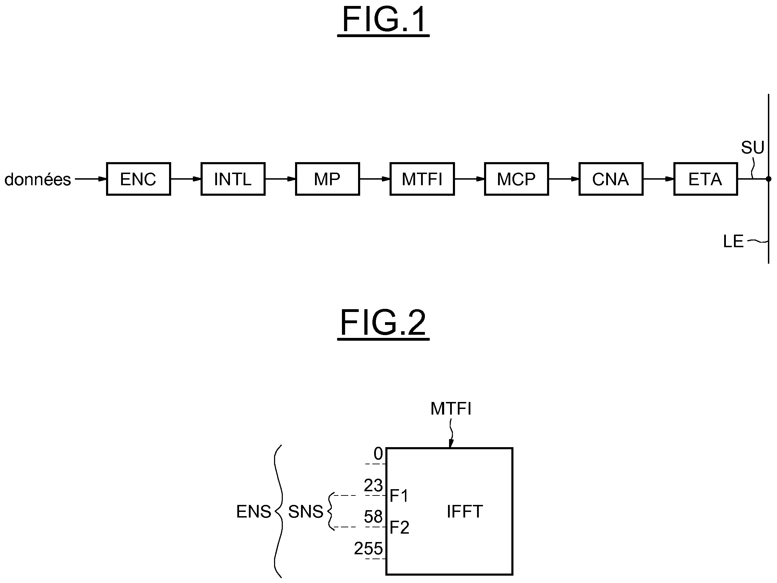

- les figures 1 à 10 illustrent schématiquement différents modes de mise en oeuvre et de réalisation de l'invention.

Les modes de mise en oeuvre et de réalisation qui vont maintenant être décrits le sont dans le cadre d'une transmission d'informations par courant porteur en ligne (CPL), bien que l'invention ne soit pas limitée à ce type d'application.

Dans tout ce qui suit, à chaque fois qu'on citera à titre d'exemples non limitatifs les normes PLC-G3 ou PRIME, on supposera que l'on considère la bande de fréquences CENELEC A (3-95 kHz).

On se réfère maintenant à la figure 1 pour illustrer schématiquement un exemple d'émetteur capable de transmettre un signal utile SU sur une ligne électrique LE par courant porteur en ligne.

La chaîne de transmission comprend par exemple un encodeur ENC, par exemple un encodeur convolutionnel, recevant les données à transmettre de moyens de codage de source. Des moyens d'entrelacement INTL sont connectés à la sortie de l'encodeur et sont suivis par des moyens de « mapage » (mapping means) qui transforment les bits en symboles selon un schéma de transformation dépendant du type de modulation utilisée, par exemple une modulation de type BPSK ou plus généralement une modulation QAM.

Chaque symbole contient des coefficients de modulation associés à des porteuses qui vont être modulées en conséquence. Les symboles sont délivrés en entrée de moyens de traitement MTFI destinés à effectuer une opération de transformée de Fourier inverse rapide (IFFT).

On notera ici en se référant plus particulièrement à la figure 2, que les porteuses modulées forment un sous-ensemble SNS de porteuses parmi un ensemble ENS disponible de porteuses (ensemble qui correspond à la taille de la transformée de Fourier inverse).

Ainsi, dans la norme PLC-G3, la taille de la transformée de Fourier inverse est égale à 256 tandis que les porteuses modulées du sous-ensemble SNS sont comprises entre les rangs 23 et 58, ce qui correspond à une bande fréquentielle F1-F2 comprise entre 35 et 91 KHz. La fréquence d'échantillonnage est ici égale à 400 KHz conduisant à un espacement entre les porteuses égal à 1,5625 KHz, ce qui rend ainsi les fréquences orthogonales (modulation OFDM).

Dans le standard PRIME, la taille de la transformée de Fourier inverse est égale à 512 alors que le nombre de porteuses du sous-ensemble SNS est égal à 97, ce qui fournit pour le signal utile une bande fréquentielle s'étendant entre 42 et 89 KHz.

Les coefficients de modulation associés aux porteuses non utilisées sont égaux à 0.

Le signal OFDM dans le domaine temporel est généré en sortie des moyens de traitement MTFI, et des moyens MCP rajoutent à chaque symbole OFDM dans le domaine temporel, un préfixe cyclique qui est une recopie en tête du symbole OFDM d'un certain nombre d'échantillons situés à la fin de ce symbole.

A titre d'exemple, dans la norme PLC-G3, la longueur du préfixe cyclique est de 30 échantillons pour une fréquence d'échantillonnage de 400 KHz tandis qu'il est de 48 échantillons pour une fréquence d'échantillonnage de 250 KHz dans la norme PRIME.

Le signal est ensuite converti dans un convertisseur numérique/analogique CNA puis traité dans un étage ETA, communément désigné par l'homme du métier sous le vocable « Analog Front End », où il subit notamment une amplification de puissance, avant d'être transmis sur la ligne électrique LE.

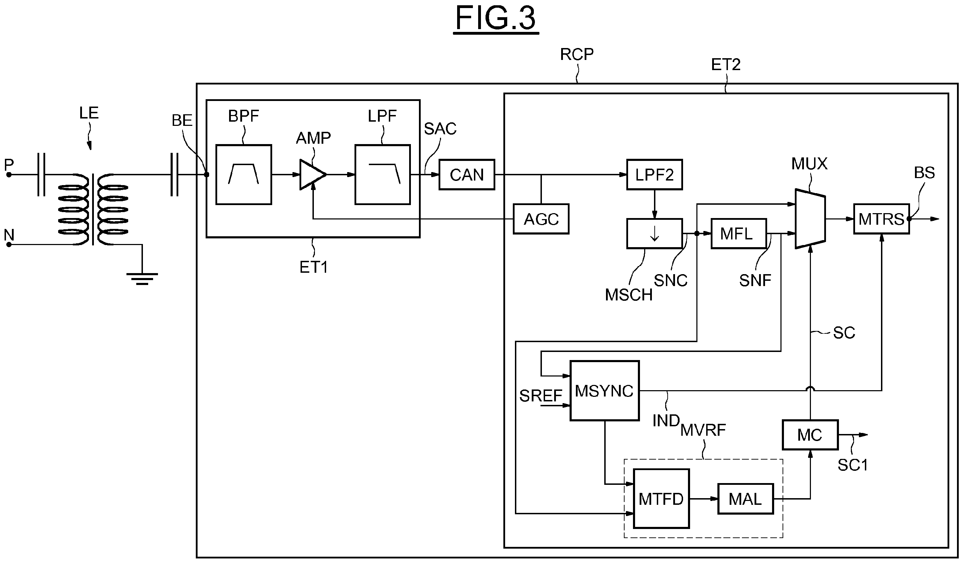

En réception, on voit, en se référant plus particulièrement à la figure 3, que le récepteur RCP comporte ici un étage d'entrée analogique ET1 dont la borne d'entrée BE est connectée sur la ligne électrique LE.

Cet étage d'entrée analogique ET1 comporte de façon classique un filtre passe bande BPF, un filtre passe bas LPF, ainsi que des moyens d'amplification AMP. La sortie de l'étage ET1 est connectée à un étage de conversion analogique/numérique CAN dont la sortie est connectée à l'entrée d'un étage de traitement ET2.

L'étage de traitement ET2 comporte ici des moyens de contrôle automatiques de gain AGC permettant de contrôler la valeur du gain des moyens d'amplification AMP de l'étage ET1.

Le signal SAC délivré en sortie de l'étage analogique ET1 et en entrée de l'étage de conversion analogique/numérique CAN désigne un signal analogique de canal issu du canal de transmission (ligne électrique) LE.

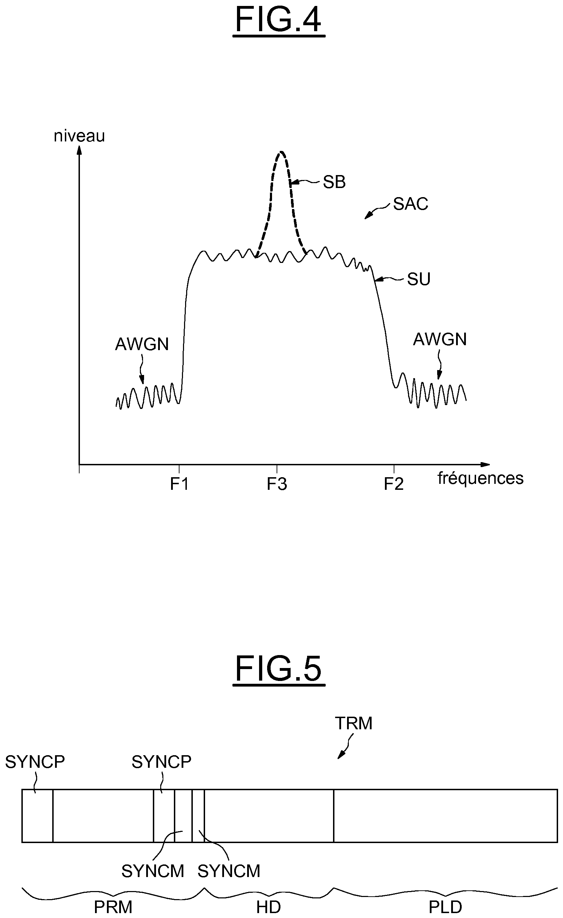

A titre d'exemple non limitatif, on a illustré sur la figure 4 de façon schématique le spectre fréquentiel d'un tel signal analogique de canal SAC.

On voit que ce signal SAC comporte le signal utile SU véhiculant les données transmises depuis l'émetteur et dont la bande de fréquences se situe entre les fréquences F1 et F2 correspondant aux numéros des porteuses modulées.

Le signal SAC comporte également éventuellement un signal de bruit SB bande étroite, qui vient éventuellement bruiter le signal utile SU.

Généralement, le signal de bruit SB comporte un seul ton situé à la fréquence F3. Il peut cependant en pratique se répartir sur la porteuse de fréquence F3 ainsi que sur quelques porteuses adjacentes.

On voit que le signal SU est un signal en forme de dôme dont le niveau est bien supérieur au niveau de bruit AWGN du canal en l'absence de signal. Le niveau du signal de bruit SB est quant à lui supérieur au niveau du signal utile SU.

Si l'on revient maintenant à la figure 3, on voit que l'étage de traitement ET2 comporte également un filtre passe bas LPF2 suivi, bien que cela ne soit pas indispensable, de moyens de sous-échantillonnage MSCH. La fréquence d'échantillonnage du signal en amont des moyens MSCH est notée Fs tandis que la fréquence d'échantillonnage du signal en sortie des moyens MSCH est notée Fss.

Le signal SNC en sortie des moyens MSCH désigne alors ici un signal numérique de canal qui est issu de la conversion analogique/numérique du signal analogique de canal SAC et sur lequel va être appliqué notamment un traitement de filtrage dans des moyens de filtrage MSL comme on va le voir plus en détail ci-après.

La fréquence Fc désigne dans la suite la fréquence de calcul à laquelle vont être notamment calculés les coefficients du filtre des moyens de filtrage MFL.

Dans la norme G3-PLC par exemple, la fréquence d'échantillonnage Fs spécifiée est de 400 KHz pour une taille de FFT de 256.

Bien qu'il eût été possible d'effectuer toutes les opérations de filtrage à une fréquence de calcul Fc égale à la fréquence d'échantillonnage Fs de 400 KHz, le fait de sous-échantillonner le signal à une fréquence Fss inférieure à Fs et d'effectuer toutes les opérations de filtrage à la fréquence de calcul Fc égale à Fss permet de réduire la complexité d'implémentation de l'étage de traitement, et notamment des moyens de filtrage, et permet également d'effectuer un traitement de transformée de Fourier rapide directe (FFT) ayant une taille réduite par rapport à la taille spécifiée de 256.

Avant de revenir plus en détail sur la structure des moyens de filtrage MFL et sur les autres moyens qui sont incorporés dans l'étage de traitement ET2, on se réfère maintenant plus particulièrement à la figure 5 pour illustrer la structure d'une trame véhiculant des symboles, par exemple dans le cadre de la norme PLC-G3.

La trame TRM comprend un préambule PRM comportant ici huit symboles connus SYNCP suivis d'un symbole de phase opposée SYNCM lui-même suivi d'un demi-symbole SYNCM.

La trame TRM comporte ensuite un en-tête (header) HD suivi d'un champ PLD contenant des symboles de données utiles à décoder et plus connus par l'homme du métier sous la dénomination anglosaxonne de « payload ».

Les symboles de l'en-tête HD contiennent notamment des informations de contrôle pour le décodage des données du champ PLD ainsi que le nombre d'octets à décoder dans le champ PLD.

Le préambule PRM de la trame TRM permet au récepteur de se synchroniser c'est-à-dire d'obtenir une indication permettant de retrouver la structure de la trame afin de pouvoir repérer le début de l'en-tête HD.

Les moyens de filtrage MFL vont être appliqués, au moins pendant la phase de synchronisation du récepteur et éventuellement comme on le verra plus en détail ci-après pendant la phase de décodage de la partie restante de la trame TRM (en-tête et champ PLD) dans le cas où la présence d'un signal de bruit est avérée.

Les moyens de filtrage MFL vont déterminer à la volée des coefficients d'un filtre prédictif d'un modèle autorégressif du signal numérique de canal SNC puis vont filtrer à la volée le signal numérique de canal dans le domaine temporel par un filtre numérique à réponse impulsionnelle finie dont les coefficients sont ceux du filtre prédictif.

Comme il est bien connu par l'homme du métier, un signal peut être modélisé à l'aide d'un bruit blanc convolué avec un filtre autorégressif. Les paramètres du modèle (les coefficients du filtre prédictif et la variance de l'erreur de prédiction) peuvent être estimés à partir de l'autocovariance du signal en résolvant les équations de Yule Walker :

$$R_{n+1}A_n = \begin{bmatrix} r_0 & \mathrm{r}_1* & \cdots & \mathrm{r}_n* \\ \mathrm{r}_1 & \ddots & \ddots & \vdots \\ \vdots & \ddots & \ddots & \mathrm{r}_1* \\ \mathrm{r}_n & \cdots & \mathrm{r}_1 & r_0 \end{bmatrix} \begin{bmatrix} 1 \\ \mathrm{A}_{n,1} \\ \vdots \\ A_{n,n} \end{bmatrix} = \begin{bmatrix} \sigma_{\mathrm{f},n}^2 \\ 0 \\ \vdots \\ 0 \end{bmatrix}$$

dans lesquelles $A_n = \begin{bmatrix} 1 \\ A_{n,1} \\ \vdots \\ A_{n,n} \end{bmatrix}$ sont les n coefficients du filtre prédictif du modèle autorégressif d'ordre n et $\sigma_{f,n}^2$ est la variance de l'erreur de prédiction. Le signe * désigne le complexe conjugué.

La séquence d'autocovariance $R_{n+1} = [r_0\ r_1 \cdots r_n]$ peut être estimée par la formule suivante :

$$r_k = \frac{1}{N}\sum_{n=0}^{N-1-k} y_{n+k}y_n \qquad k = 0,1,\ldots,n$$

dans laquelle y est une séquence de N échantillons du signal d'entrée.

D'une façon générale, N doit être suffisamment grand pour inclure tout contenu périodique du signal et pour rendre aléatoire tout contenu non périodique.

Cela étant, en pratique, N peut être égal à la taille du symbole, éventuellement sous-échantillonné, qui correspond aussi à la taille de la transformée de Fourier.

Plusieurs algorithmes existent pour résoudre les équations de Yule Walker. On peut notamment citer l'algorithme de Levinson, ou encore l'algorithme de Durbin-Watson ou encore l'algorithme de Burg ou encore un algorithme du type moindre carré.

L'homme du métier pourra notamment se référer à cet égard à la page 879 de l'annexe A de l'ouvrage de John G. Proakis, 3ème édition, intitulé Digital Communications ou encore aux chapitres 11-4-2 et 11-1-2 de ce même ouvrage.

Lorsque l'on utilise l'algorithme de Levinson, celui-ci, est un algorithme récursif qui calcule les coefficients un par un selon par exemple la séquence suivante :

$$A_0 = \begin{bmatrix} 1 \end{bmatrix};\sigma_{f,0}^2 = r_0$$

répéter pour m=0 à n :

$$\Delta_{m+1} = \begin{bmatrix} r_{m+1} & \cdots & \mathrm{r}_1 \end{bmatrix} A_m$$

$$K_{m+1} = \begin{bmatrix} \dfrac{-\Delta_{m+1}}{\sigma_{f,m}^2} \end{bmatrix}$$

$$A_{m+1} = \begin{bmatrix} A_m \\ 0 \end{bmatrix} + K_{m+1}\begin{bmatrix} 0 \\ JA_m^* \end{bmatrix}$$

$$\sigma_{f,m+1}^2 = \sigma_{f,m}^2\left(1 - K_{m+1}^2\right)$$

Une fois que les coefficients $A_n$ du filtre prédictif sont déterminés, on construit alors un filtre à réponse impulsionnelle finie (filtre FIR) dont la fonction de transfert en z est définie par la formule ci-dessous :

$$1 + A_1 z^{-1} + A_2 z^{-2} + A_3 z^{-3} + \ldots$$

Dans cette formule, les coefficients $A_n$ du filtre FIR sont les coefficients $A_n$ du filtre prédictif du modèle autorégressif évoqué ci-avant.

Le jeu de coefficients du filtre est avantageusement limité, c'est-à-dire inférieur ou égal à un nombre limite et préférentiellement égal à ce nombre limite.

En effet, compte tenu notamment du fait que le signal utile est modulé sur seulement un sous-ensemble de porteuses d'un ensemble de porteuses disponible, un trop grand nombre de coefficients du filtre risquerait de provoquer une trop forte atténuation du signal lors du filtrage en particulier lorsqu'il n'y a pas de signal de bruit.

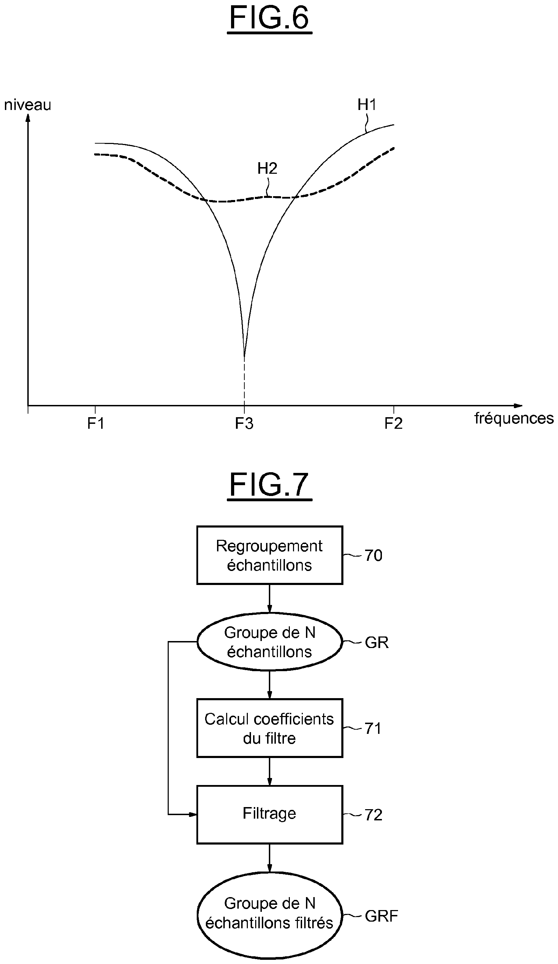

D'une façon générale, le nombre limite de coefficients est choisi par l'homme du métier, compte tenu de l'application et des spécifications envisagées, pour que comme, illustré schématiquement sur la figure 6, la réponse fréquentielle H1 du filtre en présence d'un signal de bruit bande étroite présente une encoche aux alentours de la fréquence F3 du signal de bruit et pour que la réponse fréquentielle H2 de ce filtre présente, en l'absence du signal de bruit, un profil relativement plat dans le bande fréquentielle F1, F2 du signal utile de façon à obtenir une atténuation du signal inférieure à une atténuation limite acceptable.

Cette atténuation limite acceptable dépend de l'implémentation et de la dynamique supportée par les différents moyens de traitement. L'homme du métier saura choisir cette atténuation limite acceptable en fonction de ces conditions.

Cela étant, à titre d'exemple non limitatif l'atténuation limite acceptable peut être de l'ordre de 6dB.

En pratique, pour satisfaire à cette condition, on pourra par exemple choisir un nombre de coefficients du filtre inférieur ou égal à trois quarts, et préférentiellement à la moitié, de la longueur du préfixe cyclique exprimée en nombre d'échantillons compte tenu de la fréquence de calcul Fc utilisée.

Dans la norme PLC-G3, la longueur du préfixe cyclique pour une fréquence d'échantillonnage Fs de 400 KHz est de 30 échantillons.

Ainsi, si l'on considère la norme PLC-G3, on pourra choisir par exemple un nombre de coefficients égal à 15Fc/Fs.

En pratique, comme illustré sur la figure 7, le traitement de filtrage effectué à la volée dans le domaine temporel prévoit un regroupement d'échantillons (étape 70) de façon à former un groupe courant GR de N échantillons.

Puis, dans l'étape 71, on calcule les coefficients du filtre prédictif en exécutant l'algorithme de Levinson conformément à la séquence mentionnée ci-avant pour m variant de 0 à la valeur limite du nombre de coefficients.

Puis, dans l'étape 72, on filtre le groupe courant GR de N échantillons dans le domaine temporel avec le filtre à réponse impulsionnelle finie dont les coefficients sont ceux qui viennent d'être calculés pour le filtre prédictif.

On obtient alors un groupe GRF de N échantillons filtrés.

Par ailleurs, il est particulièrement avantageux que la fréquence de calcul Fc des coefficients du filtre (égale à la fréquence Fs ou éventuellement à la fréquence Fss en cas de sous-échantillonnage) ne soit pas trop importante par rapport à la fréquence maximale du signal numérique de canal (éventuellement sous-échantillonné.

En effet, si la fréquence de calcul Fc est trop élevée par rapport à cette fréquence maximale, le signal numérique de canal ne sera pas vu comme un bruit « blanc » par rapport au signal de bruit et on risque d'avoir une atténuation trop forte du signal utile.

Ainsi, on peut choisir une fréquence de calcul Fc comprise entre 2 et 5 fois, et préférentiellement entre 2 et 3 fois, la fréquence maximale du signal numérique de canal sur lequel on calcule le coefficient du filtre.

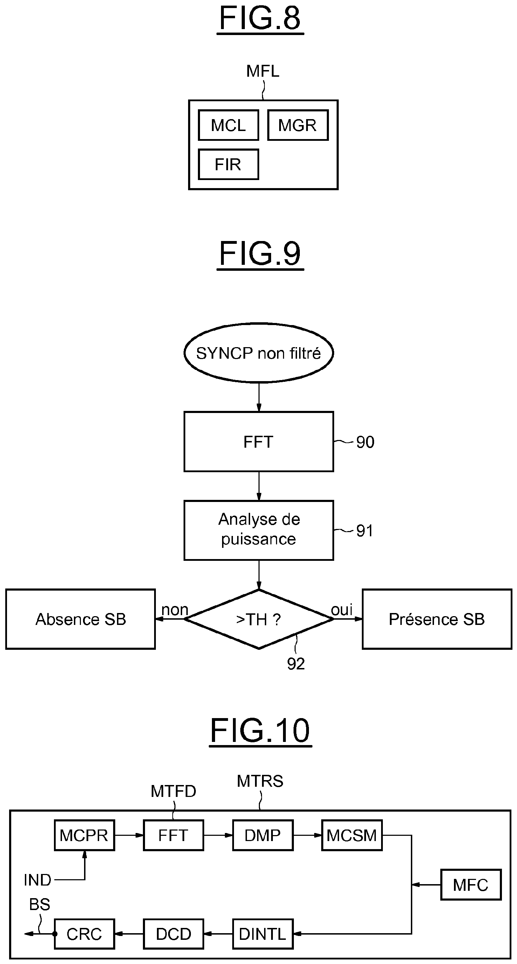

En pratique, comme illustré sur la figure 8, les moyens de filtrage MFL comportent fonctionnellement des moyens MGR configurés pour regrouper les échantillons en groupes d'échantillons, un module MCL de calcul des coefficients du filtre prédictif et un module FIR implémentant le filtre à réponse impulsionnelle finie.

En pratique, ces différents moyens et modules peuvent être par exemple réalisés de façon logicielle au sein d'un microprocesseur.

Si l'on se réfère de nouveau plus particulièrement à la figure 3, on voit que le signal numérique filtré SNF délivré par les moyens de filtrage MFL est notamment utilisé par des moyens de synchronisation MSYNC, de structure classique et connue en soi, pour permettre au récepteur RCP de se synchroniser c'est-à-dire par exemple de retrouver la structure de la trame et son cadencement temporel de façon à pouvoir décoder correctement l'en-tête HD et le champ PLD.

Plus précisément, les moyens de synchronisation MSYNC effectuent des traitements de corrélation glissante entre le signal numérique filtré SNF et un signal de référence SREF qui est en l'espèce un symbole connu de la trame, par exemple un symbole connu du préambule tel que le symbole SYNCP.

Dans l'exemple décrit ici, l'indication IND représentative de la structure de trame et d'une synchronisation effectuée sera par exemple l'occurrence de la transition entre le dernier symbole SYNCP du préambule et le symbole SYNCM.

Cette indication IND va être transmise aux moyens de traitement supplémentaires MTRS de l'étage de traitement ET2 de façon à permettre le décodage des symboles de l'en-tête HD et du champ PLD de la trame.

Cela étant, en observant simplement le signal numérique filtré, il est très difficile, voire impossible, de savoir si ce signal numérique filtré résulte d'un signal utile bruité ou d'un signal utile non bruité.

Or, il est particulièrement avantageux, comme on va le voir plus en détail ci-après, de connaître cette information de façon à améliorer encore les performances du décodage de la partie restante de la trame.

A cet égard, l'étage de traitement ET2 comporte des moyens de vérification MVRF configurés pour vérifier la présence ou non du signal de bruit dans le signal utile, une fois que la synchronisation est effectuée.

Plus précisément, cette vérification va être effectuée sur le préambule du signal numérique de canal SNC non filtré, et plus particulièrement sur l'un des symboles du préambule, par exemple le symbole SYNCP non filtré.

Comme illustré sur la figure 9, on procède à une transformée de Fourier rapide directe FFT dans une étape 86 de façon à effectuer une transformation du domaine temporel vers le domaine fréquentiel, puis on procède (étape 91) à une analyse de puissance sur les raies du spectre fréquentiel obtenu en sortie de la transformée de Fourier.

A cet égard, on examine dans l'étape 92 si certaines raies fréquentielles ont une puissance ou un niveau supérieur à un seuil fixé TH.

Si aucune des raies fréquentielles du spectre n'a un niveau supérieur au seuil TH, alors on en conclut qu'il y a une absence de signal de bruit SB dans le signal numérique de canal SNC.

Dans le cas contraire, si au moins une raie a une puissance supérieure au seuil TH, alors on en conclut qu'on est en présence d'un signal de bruit bande étroite SB.

Et, cette analyse permet également de connaître la position fréquentielle du signal de bruit, c'est-à-dire quels sont les bins concernés.

Matériellement, comme illustré schématiquement sur la figure 3, les moyens de vérification MVRF comportent des moyens MTFD configurés pour effectuer le traitement de transformée de Fourier directe ainsi que des moyens d'analyse MAL. En pratique, ces moyens peuvent là encore être réalisés par exemple de façon logicielle au sein d'un microprocesseur.

Par ailleurs, comme on va le voir ci-après, les moyens MTFD sont avantageusement ceux qui sont déjà présents dans les moyens de traitement supplémentaires MTRS.

Pour la suite du traitement, c'est-à-dire le décodage des symboles de la partie restante de la trame, celui-ci va être effectué sur le signal numérique de canal SNC non filtré s'il ressort de la vérification mentionnée précédemment que ce signal SNC n'était en fait pas bruité par le signal de bruit SB bande étroite. Par contre, si la vérification montre que le signal de bruit était présent, alors le traitement de la partie restante de la trame va continuer à être effectué sur le signal numérique filtré SNF délivré par les moyens de filtrage MFL.

A cet égard, des moyens de commande, matérialisés ici à titre illustratif, par un multiplexeur MUX commandé par un signal SC délivré par un module de commande MC connecté en sortie des moyens de vérification MVRF et représentatif de la présence ou de l'absence du signal de bruit, va activer ou désactiver les moyens de filtrage MFL pour le traitement ultérieur de la partie restante de la trame.

Le module de commande peut être réalisé par exemple par un circuit logique ou bien de façon logicielle.

Plus précisément, comme illustré schématiquement sur la figure 3, en cas d'absence de signal de bruit, le signal numérique de canal SNC est délivré directement aux moyens de traitement supplémentaires MTRS tandis qu'en présence du signal de bruit SB, c'est le signal numérique filtré SNF qui est délivré aux moyens de traitement supplémentaires MTRS.

Si l'on se réfère maintenant plus particulièrement à la figure 10, on voit que ces moyens de traitement complémentaires MTRS comportent des moyens MCPR configurés pour retirer de chaque symbole le préfixe cyclique, suivis des moyens MTFD configurés pour effectuer la transformée de Fourier rapide directe FFT.

Les moyens MTFD sont suivis par des moyens de démapage DMP (demapping means) fournissant pour chaque porteuse une valeur du coefficient de modulation correspondant (bin). Ces moyens de démapage DMP sont suivis d'un module MCSM configuré pour déterminer pour chaque coefficient de modulation une indication de confiance (décision douce : « soft decision ») de ladite valeur. Ce module est classique et connu en soi et utilise par exemple un algorithme du type LogMAP.

Les moyens de traitement supplémentaires MTRS comportent également des moyens de désentrelacement DINTL suivis d'un décodeur DCD, par exemple un décodeur de type Viterbi, suivi de moyens CRC aptes à effectuer un contrôle de parité. La sortie des moyens CRC est connectée à la borne de sortie BS des moyens MTRS qui est connectée aux moyens formant la couche MAC du récepteur.

Lorsque les moyens de traitement supplémentaires MTRS reçoivent en entrée le signal numérique filtré, c'est-à-dire en présence d'un signal de bruit sur le signal numérique de canal SNC, il est particulièrement avantageux que les indications de confiance (décision douce) associées aux bins sur lesquels est présent le signal de bruit ainsi que celles associées éventuellement aux bins voisins, soient mises à zéro. En effet, de telles décisions douces nulles sont vues comme étant des décisions neutres pour l'algorithme de correction d'erreur mis en oeuvre dans le décodeur Viterbi.

Ceci permet d'améliorer encore les performances du décodage du couple désentrelaceur-décodeur.

A cet égard, les moyens de traitement MTRF comportent des moyens de forçage MFC configurés pour effectuer ce forçage à zéro.

Là encore, matériellement, l'ensemble des moyens et modules des moyens de traitement supplémentaires MTRS peuvent être réalisés par des modules logiciels au sein d'un microprocesseur.

Par ailleurs, de façon à ne pas perturber le décodage de la partie restante de la trame lorsque les moyens de filtrage MFL sont activés, il est préférable, pour le décodage de cette partie restante de la trame, de figer les coefficients du filtre FIR c'est-à-dire de ne pas les actualiser au fur et à mesure des décodages de la parie restante de la trame.

A cet égard, le module de commande MC peut délivrer un signal de gel SC1 au module de calcul MCL des coefficients du filtre.

Selon un aspect de l'invention, il est possible ainsi d'obtenir une amélioration notable des performances dans la phases de synchronisation et dans le décodage des symboles de la trame notamment en présence de signaux de bruit bande étroite qui ont des niveaux qui peuvent aller jusqu'à 50 à 60 dB au-dessus du niveau du signal OFDM utile alors que les normes actuelles ne requièrent un décodage robuste qu'en présence d'un signal de bruit dont le niveau n'excède celui du signal utile que de 20 dB.

## Revendications

1. Procédé de traitement d'un signal analogique de canal issu d'un canal de transmission, le signal analogique de canal (SAC) étant susceptible de comporter un signal utile (SU) modulé sur un sous-ensemble d'un ensemble de porteuses disponibles, véhiculant au moins une trame de symboles selon une structure de trame et éventuellement bruité par au moins un signal de bruit (SB) en bande étroite, le procédé comprenant une conversion analogique/numérique (CAN) du signal analogique de canal et un traitement de synchronisation comportant un traitement de filtrage (MFL) incluant une détermination à la volée dans le domaine temporel d'un nombre limité de coefficients d'un filtre prédictif d'un modèle auto régressif d'un signal numérique de canal (SNC) issu de ladite conversion analogique/numérique et un filtrage à la volée du signal numérique de canal dans le domaine temporel par un filtre numérique à réponse impulsionnelle finie dont les coefficients sont ceux du filtre prédictif, et une détection d'au moins une indication (IND) permettant d'identifier au moins un endroit de ladite structure de trame, à partir du signal numérique de canal filtré (SNF) et d'un signal de référence (SREF).

2. Procédé selon la revendication 1, dans lequel chaque symbole comprend un préfixe cyclique et le nombre de coefficients du filtre est inférieur ou égal à un nombre limite de l'ordre de trois quarts de la longueur du préfixe cyclique exprimée en nombre d'échantillons.

3. Procédé selon la revendication 1 ou 2, dans lequel les coefficients du filtre prédictif sont calculés à une fréquence de calcul comprise entre 2 et 5 fois la fréquence maximale dudit signal numérique de canal (SNC).

4. Procédé selon l'une des revendications précédentes, dans lequel ladite détermination à la volée desdits coefficients et ledit filtrage à la volée comprennent un regroupement (70) des échantillons dudit signal numérique en groupes successifs d'échantillons (GR), une détermination (71) d'un bloc courant de coefficients en utilisant le groupe courant d'échantillons, et une application (72) sur ledit groupe courant du filtre à réponse impulsionnelle finie ayant ledit bloc courant de coefficients de façon à obtenir un groupe courant filtré d'échantillons (GRF).

5. Procédé selon l'une des revendications précédentes, dans lequel chaque trame comprend un préambule (PRM) comportant des symboles connus et précédant la partie restante (HD, PLD) de la trame, et le traitement de filtrage est appliqué au moins pour détecter ladite au moins une indication au niveau du préambule d'au moins une trame.

6. Procédé selon la revendication 5, dans lequel le traitement de filtrage est appliqué au moins pour détecter ladite au moins une indication (IND) au niveau du préambule de chaque trame.

7. Procédé selon l'une des revendications précédentes, comprenant en outre après la détection de ladite au moins une indication, une vérification (MVRF) de la présence ou de l'absence dudit signal de bruit à partir d'au moins un symbole du signal utile non filtré.

8. Procédé selon la revendication 7, dans lequel ladite vérification comprend un traitement de transformée de Fourier directe (90) sur ledit au moins un symbole (SYNCP) et une analyse (91) de la puissance de chaque porteuse.

**9.** Procédé selon la revendication 7 ou 8 prise en combinaison avec la revendication 5 ou 6, dans lequel ladite vérification est effectuée sur au moins un symbole (SYNCP) du préambule.

**10.** Procédé selon la revendication 9, comprenant en outre un traitement de ladite partie restante de chaque trame et dans lequel en cas d'absence du signal de bruit, le traitement (MTRS) de ladite partie restante de la trame est effectué sur le signal numérique de canal non filtré.

**11.** Procédé selon la revendication 9, dans lequel chaque symbole comporte des coefficients de modulation respectivement associés auxdites porteuses, et le procédé comprend en outre un traitement de la partie restante (MTRS) de la trame effectué en cas de présence dudit signal de bruit sur le signal numérique de canal filtré et comportant un traitement de transformée de Fourier directe, un traitement de démapage fournissant pour chaque porteuse une valeur dudit coefficient de modulation et une détermination pour chaque coefficient de modulation d'une indication de confiance de ladite valeur et un forçage à zéro des indications de confiance des coefficients de modulation associés aux porteuses dont les fréquences correspondent à celles du signal de bruit.

**12.** Procédé selon la revendication 11, dans lequel les valeurs des coefficients du filtre sont gelées lors du traitement de la partie restante de la trame.

**13.** Procédé selon l'une des revendications précédentes, dans lequel le signal utile est un signal modulé selon une modulation OFDM.

**14.** Procédé selon l'une des revendications précédentes, dans lequel le canal de transmission est une ligne électrique (LE) et le signal utile est un signal véhiculé par courant porteur de ligne.

**15.** Récepteur, comprenant un étage d'entrée (ET1) destiné à être connecté sur un canal de transmission (LE) et configuré pour délivrer un signal analogique de canal (SAC) issu du canal de transmission, le signal analogique de canal étant susceptible de comporter un signal utile (SU) modulé sur un sous-ensemble d'un ensemble de porteuses disponibles, véhiculant au moins une trame de symboles selon une structure de trame et éventuellement bruité par au moins un signal de bruit (SB) en bande étroite, un étage de conversion analogique/numérique (CAN) pour effectuer une conversion analogique/numérique du signal analogique de canal et un étage de traitement (ET2) comportant des moyens de filtrage (MFL) incluant un module de calcul (MCL) configuré pour déterminer à la volée un nombre limité de coefficients d'un filtre prédictif d'un modèle auto régressif d'un signal numérique de canal (SNC) issu de l'étage de conversion analogique/numérique, un filtre numérique à réponse impulsionnelle finie (FIR) dont les coefficients sont ceux du filtre prédictif, pour effectuer un filtrage à la volée du signal numérique de canal dans le domaine temporel et des moyens de détection (MSYNC) configurés pour détecter au moins une indication (IND) permettant d'identifier au moins un endroit de ladite structure de trame, à partir du signal numérique filtré (SNF) et d'un signal de référence (SREF).

**16.** Récepteur selon la revendication 15, dans lequel chaque symbole comprend un préfixe cyclique et le nombre de coefficients du filtre est de inférieur ou égal à un nombre limite de l'ordre de trois quarts de la longueur du préfixe cyclique exprimée en nombre d'échantillons.

**17.** Récepteur selon l'une des revendications 15 ou 16, dans lequel le module de calcul (MCL) est configuré pour calculer les coefficients du filtre prédictif à une fréquence de calcul comprise entre 2 et 5 fois la fréquence maximale dudit signal numérique de canal.

**18.** Récepteur selon l'une des revendications 15 à 17, dans lequel les moyens de filtrage comprennent des moyens de regroupement (MGR) configurés pour regrouper des échantillons dudit signal numérique de canal en groupes successifs d'échantillons, le module de calcul (MCL) est configuré pour déterminer un bloc courant de coefficients en utilisant le groupe courant d'échantillons, et le filtre numérique (FIR) est configuré pour recevoir en entrée ledit groupe courant d'échantillons de façon à délivrer un groupe courant filtré d'échantillons.

**19.** Récepteur selon l'une des revendications 15 à 18, dans lequel chaque trame comprend un préambule (PRM) comportant des symboles connus et précédant la partie restante de la trame, et l'étage de traitement (ET2) comporte des moyens de commande (MC, MUX) configurés pour délivrer ledit signal numérique de canal aux moyens de filtrage au moins pour que les moyens de détection détectent ladite au moins une indication au niveau du préambule d'au moins une trame.

20. Récepteur selon la revendication 19, dans lequel les moyens de commande (MC, MUX) sont configurés pour délivrer ledit signal numérique de canal aux moyens de filtrage au moins pour que les moyens de détection détectent ladite au moins une indication au niveau du préambule de chaque trame.

21. Récepteur selon l'une des revendications 19 à 20, comprenant en outre des moyens de vérification (MVRF) configurés pour effectuer après la détection de ladite au moins une indication (IND), une vérification de la présence ou de l'absence dudit signal de bruit à partir d'au moins un symbole du signal utile non filtré.

22. Récepteur selon la revendication 21, dans lequel les moyens de vérification comportent un étage de transformée de Fourier directe (MTFD) configuré pour effectuer un traitement de transformée de Fourier directe sur ledit au moins un symbole et des moyens d'analyse (MAL) configurés pour effectuer une analyse de la puissance de chaque porteuse.

23. Récepteur selon la revendication 21 ou 22 prise en combinaison avec la revendication 19 ou 20, dans lequel les moyens de vérification (MVRF) sont configurés pour effectuer ladite vérification sur au moins un symbole du préambule.

24. Récepteur selon la revendication 23, dans lequel l'étage de traitement (ET2) comprend en outre des moyens de traitement supplémentaires (MTRS) configurés pour effectuer un traitement de ladite partie restante de chaque trame et en cas d'absence du signal de bruit, les moyens de commande (MC, MUX) sont configurés pour délivrer ladite partie restante de la trame directement aux moyens de traitement supplémentaires (MTRS) sans passer par les moyens de filtrage (MFL).

25. Récepteur selon la revendication 23, dans lequel chaque symbole comportant des coefficients de modulation respectivement associés aux porteuses, et l'étage de traitement comprend en outre des moyens de traitement supplémentaires configurés pour effectuer un traitement de ladite partie restante de chaque trame, les moyens de traitement supplémentaires (MTRS) comportant un étage de transformée de Fourier directe (MTFD), un moyen de démapage (DMP) fournissant pour chaque porteuse une valeur dudit coefficient de modulation et un module (MCSM) apte à déterminer pour chaque coefficient de modulation une indication de confiance de ladite valeur, et des moyens de forçage (MFC) configurés pour, en cas de présence dudit signal de bruit, forcer à zéro des indications de confiance des coefficients de modulation associés aux porteuses dont les fréquences correspondent à celles du signal de bruit.

26. Récepteur selon la revendication 25, dans lequel les moyens de commande (MC) sont configurés pour désactiver le module de calcul (MCL) des coefficients du filtre lors du traitement de ladite partie restante de la trame.

27. Récepteur selon l'une des revendications 15 à 26, dans lequel le signal utile est un signal modulé selon une modulation OFDM.

28. Récepteur selon l'une des revendications 15 à 27, dans lequel, le canal de transmission étant une ligne électrique (LE), le signal utile est un signal véhiculé par courant porteur de ligne.

**Patentansprüche**

1. Verfahren zur Verarbeitung eines von einem Übertragungskanal stammenden analogen Kanalsignals, wobei das analoge Kanalsignal (SAC) ein Nutzsignal (SU) aufweisen kann, das auf eine Teileinheit einer Einheit von verfügbaren Trägern moduliert ist, das mindestens einen Rahmen von Symbolen gemäß einer Rahmenstruktur und ggf. durch mindestens ein Schmalband-Rauschsignal (SB) verrauscht transportiert, wobei das Verfahren eine Analog-Digital-Umwandlung (CAN) des analogen Kanalsignals und eine Synchronisationsverarbeitung, die eine Filterverarbeitung (MFL) aufweist, die eine spontane Bestimmung im Zeitbereich einer begrenzten Anzahl von Koeffizienten eines prädiktiven Filters eines autoregressiven Modells eines von der Analog-Digital-Umwandlung stammenden digitalen Kanalsignals (SNC) und eine spontane Filterung des digitalen Kanalsignals im Zeitbereich durch ein digitales Filter mit endlicher Impulsantwort umfasst, dessen Koeffizienten diejenigen des prädiktiven Filters sind, und eine Erfassung mindestens einer Anzeige (IND) enthält, die es ermöglicht, mindestens eine Stelle der Rahmenstruktur ausgehend vom gefilterten digitalen Kanalsignal (SNF) und von einem Bezugssignal (SREF) zu erkennen.

2. Verfahren nach Anspruch 1, wobei jedes Symbol ein zyklisches Präfix enthält und die Anzahl von Koeffizienten des Filters niedriger als eine oder gleich einer Grenzanzahl in der Größenordnung von Dreiviertel der Länge des zyklischen Präfix ausgedrückt in der Anzahl von Tastproben ist.

3. Verfahren nach Anspruch 1 oder 2, wobei die Koeffizienten des prädiktiven Filters mit einer Rechenfrequenz berechnet werden, die zwischen dem 2- und 5-Fachen der maximalen Frequenz des digitalen Kanalsignals (SNC) liegt.

4. Verfahren nach einem der vorhergehenden Ansprüche, wobei die spontane Bestimmung der Koeffizienten und die spontane Filterung eine Gruppierung (70) der Tastproben des digitalen Signals in aufeinanderfolgende Gruppen von Tastproben (GR), eine Bestimmung (71) eines aktuellen Blocks von Koeffizienten unter Verwendung der aktuellen Gruppe von Tastproben, und eine Anwendung (72) auf die den aktuellen Block von Koeffizienten enthaltende aktuelle Gruppe des Filters mit endlicher Impulsantwort enthalten, um eine aktuelle gefilterte Gruppe von Tastproben (GRF) zu erhalten.

5. Verfahren nach einem der vorhergehenden Ansprüche, wobei jeder Rahmen eine Präambel (PRM) enthält, die bekannte Symbole aufweist und vor dem verbleibenden Teil (HD, PLD) des Rahmens liegt, und die Filterverarbeitung mindestens angewendet wird, um die mindestens eine Anzeige im Bereich der Präambel mindestens eines Rahmens zu erfassen.

6. Verfahren nach Anspruch 5, wobei die Filterverarbeitung mindestens angewendet wird, um die mindestens eine Anzeige (IND) im Bereich der Präambel jedes Rahmens zu erfassen.

7. Verfahren nach einem der vorhergehenden Ansprüche, das außerdem nach der Erfassung der mindestens einen Anzeige eine Überprüfung (MVRF) des Vorhandenseins oder der Abwesenheit des Rauschsignals ausgehend von mindestens einem Symbol des nicht gefilterten Nutzsignals enthält.

8. Verfahren nach Anspruch 7, wobei die Überprüfung eine Verarbeitung der direkten Fourier-Transformation (90) an dem mindestens einen Symbol (SYNCP) und eine Analyse (91) der Leistung jedes Trägers enthält.

9. Verfahren nach Anspruch 7 oder 8 in Kombination mit Anspruch 5 oder 6, wobei die Überprüfung an mindestens einem Symbol (SYNCP) der Präambel ausgeführt wird.

10. Verfahren nach Anspruch 9, das außerdem eine Verarbeitung des verbleibenden Teils jedes Rahmens enthält, und wobei im Fall der Abwesenheit des Rauschsignals die Verarbeitung (MTRS) des verbleibenden Teils des Rahmens am nicht gefilterten digitalen Kanalsignal ausgeführt wird.

11. Verfahren nach Anspruch 9, wobei jedes Symbol den Trägern zugeordnete Modulationskoeffizienten aufweist, und das Verfahren außerdem eine Verarbeitung des verbleibenden Teils (MTRS) des Rahmens enthält, die im Fall des Vorhandenseins des Rauschsignals im gefilterten digitalen Kanalsignal ausgeführt wird und eine Verarbeitung durch direkte Fourier-Transformation, eine Demapping-Verarbeitung, die für jeden Träger einen Wert des Modulationskoeffizienten liefert, und eine Bestimmung für jeden Modulationskoeffizienten einer Vertrauensanzeige des Werts und ein Zero-Forcing der Vertrauensanzeigen der den Trägern zugeordneten Modulationskoeffizienten enthält, deren Frequenzen denjenigen des Rauschsignals entsprechen.

12. Verfahren nach Anspruch 11, wobei die Werte der Koeffizienten des Filters bei der Verarbeitung des verbleibenden Teils des Rahmens eingefroren werden.

13. Verfahren nach einem der vorhergehenden Ansprüche, wobei das Nutzsignal ein gemäß einer OFDM-Modulation moduliertes Signal ist.

14. Verfahren nach einem der vorhergehenden Ansprüche, wobei der Übertragungskanal eine elektrische Leitung (LE) ist und das Nutzsignal ein durch Leitungs-Trägerstrom transportiertes Signal ist.

15. Empfänger, der eine Eingangsstufe (ET1), die dazu bestimmt ist, mit einem Übertragungskanal (LE) verbunden zu werden und konfiguriert ist, ein vom Übertragungskanal stammendes analoges Kanalsignal (SAC) zu liefern, wobei das analoge Kanalsignal fähig ist, ein Nutzsignal (SU) aufzuweisen, das auf eine Teileinheit einer Einheit von verfügbaren Trägern moduliert ist, das mindestens einen Rahmen von Symbolen gemäß einer Rahmenstruktur und ggf. durch mindestens ein Schmalband-Rauschsignal (SB) verrauscht transportiert, eine Stufe der Analog-Digital-Umwandlung (CAN), um eine Analog-Digital-Umwandlung des analogen Kanalsignals durchzuführen, und eine Verarbeitungsstufe (ET2) enthält, die Filtereinrichtungen (MFL) aufweist, die ein Rechenmodul (MCL), das konfiguriert ist, eine begrenzte Anzahl von Koeffizienten eines prädiktiven Filters eines autoregressiven Modells eines digitalen Kanalsignals (SNC) zu bestimmen, das von der Analog-Digital-Umwandlungsstufe stammt, ein digitales Filter mit endlicher Impulsantwort (FIR), dessen Koeffizienten diejenigen des prädiktiven Filters sind, um eine spontane Filterung des digitalen Kanalsignals im Zeitbereich durchzuführen, und Erfassungseinrichtungen (MSYNC) enthält, die konfiguriert sind, mindestens eine Anzeige (IND) zu erfassen, die es ermöglicht, mindestens eine Stelle der Rahmenstruktur zu erkennen, ausgehend vom gefilterten digitalen Signal (SNF) und einem Bezugssignal (SREF).

16. Empfänger nach Anspruch 15, wobei jedes Symbol ein zyklisches Präfix enthält und die Anzahl von Koeffizienten des Filters niedriger ist als eine oder gleich einer Grenzanzahl in der Größenordnung von Dreiviertel der Länge des zyklischen Präfix ausgedrückt in Anzahl von Tastproben.

17. Empfänger nach einem der Ansprüche 15 oder 16, wobei das Rechenmodul (MCL) konfiguriert ist, die Koeffizienten des prädiktiven Filters mit einer Rechenfrequenz zu berechnen, die zwischen dem 2-und 5-Fachen der maximalen Frequenz des digitalen Kanalsignals liegt.

18. Empfänger nach einem der Ansprüche 15 bis 17, wobei die Filtereinrichtungen Gruppierungseinrichtungen (MGR) enthalten, die konfiguriert sind, Tastproben des digitalen Kanalsignals in aufeinanderfolgenden Gruppen von Tastproben zu gruppieren, das Rechenmodul (MCL) konfiguriert ist, einen aktuellen Block von Koeffizienten unter Verwendung der aktuellen Gruppe von Tastproben zu bestimmen, und das digitale Filter (FIR) konfiguriert ist, am Eingang die aktuelle Gruppe von Tastproben zu empfangen, um eine gefilterte aktuelle Gruppe von Tastproben zu liefern.

19. Empfänger nach einem der Ansprüche 15 bis 18, wobei jeder Rahmen eine Präambel (PRM) enthält, die bekannte Symbole aufweist und vor dem verbleibenden Teil des Rahmens liegt, und die Verarbeitungsstufe (ET2) Steuereinrichtungen (MC, MUX) aufweist, die konfiguriert sind, das digitale Kanalsignal zumindest an die Filtereinrichtungen zu liefern, damit die Erfassungseinrichtungen die mindestens eine Anzeige im Bereich der Präambel mindestens eines Rahmens erfassen.

20. Empfänger nach Anspruch 19, wobei die Steuereinrichtungen (MC, MUX) konfiguriert sind, das digitale Kanalsignal zumindest an die Filtereinrichtungen zu liefern, damit die Erfassungseinrichtungen die mindestens eine Anzeige im Bereich der Präambel jedes Rahmens erfassen.

21. Empfänger nach einem der Ansprüche 19 bis 20, der außerdem Überprüfungseinrichtungen (MVRF) enthält, die konfiguriert sind, nach der Erfassung der mindestens einen Anzeige (IND) eine Überprüfung des Vorhandenseins oder der Abwesenheit des Rauschsignals ausgehend von mindestens einem Symbol des nicht gefilterten Nutzsignals auszuführen.

22. Empfänger nach Anspruch 21, wobei die Überprüfungseinrichtungen eine Stufe der direkten Fourier-Transformation (MTFD), die konfiguriert ist, eine Verarbeitung der direkten Fourier-Transformation an dem mindestens einen Symbol auszuführen, und Analyseeinrichtungen (MAL) aufweisen, die konfiguriert sind, eine Analyse der Leistung jedes Trägers auszuführen.

23. Empfänger nach Anspruch 21 oder 22 in Kombination mit Anspruch 19 oder 20, wobei die Überprüfungseinrichtungen (MVRF) konfiguriert sind, die Überprüfung an mindestens einem Symbol der Präambel auszuführen.

24. Empfänger nach Anspruch 23, wobei die Verarbeitungsstufe (ET2) außerdem zusätzliche Verarbeitungseinrichtungen (MTRS) enthält, die konfiguriert sind, eine Verarbeitung des verbleibenden Teils jedes Rahmens auszuführen, und im Fall der Abwesenheit des Rauschsignals die Steuereinrichtungen (MC, MUX) konfiguriert sind, den verbleibenden Teil des Rahmens direkt an die zusätzlichen Verarbeitungseinrichtungen (MTRS) zu liefern, ohne über die Filtereinrichtungen (MFL) zu gehen.

25. Empfänger nach Anspruch 23, wobei jedes Symbol den Trägern zugeordnete Modulationskoeffizienten aufweist, und die Verarbeitungsstufe außerdem zusätzliche Verarbeitungseinrichtungen, die konfiguriert sind, eine Verarbeitung des verbleibenden Teils jedes Rahmens auszuführen, wobei die zusätzlichen Verarbeitungseinrichtungen (MTRS) eine Stufe der direkten Fourier-Transformation (MTFD), eine Demapping-Einrichtung (DMP), die für jeden Träger einen Wert des Modulationskoeffizienten liefert, und ein Modul (MCSM) aufweisen, das für jeden Modulationskoeffizienten eine Vertrauensanzeige des Werts bestimmen kann, und Forcing-Einrichtungen (MFC) enthält, die konfiguriert sind, um im Fall des Vorhandenseins des Rauschsignals an Vertrauensanzeigen der Modulationskoeffizienten, die den Trägern zugeordnet sind, deren Frequenzen denjenigen des Rauschsignals entsprechen, ein Zero-Forcing durchzuführen.

26. Empfänger nach Anspruch 25, wobei die Steuereinrichtungen (MC) konfiguriert sind, das Rechenmodul (MCL) der Koeffizienten des Filters bei der Verarbeitung des verbleibenden Teils des Rahmens zu deaktivieren.

27. Empfänger nach einem der Ansprüche 15 bis 26, wobei das Nutzsignal ein gemäß einer OFDM-Modulation moduliertes Signal ist.

28. Empfänger nach einem der Ansprüche 15 bis 27, wobei, da der Übertragungskanal eine elektrische Leitung (LE) ist, das Nutzsignal ein von einem Leitungs-Trägerstrom transportiertes Signal ist.


**Claims**

1. Method for processing a channel analog signal coming from a transmission channel, the channel analog signal (SAC) being able to comprise a useful signal (SU) modulated on a sub-set from a set of available carriers, carrying at least one frame of symbols according to a frame structure and which could be affected by noise from at least one noise signal (SB) in a narrow band, the method comprising an analog/digital conversion (CAN) of the channel analog signal and a synchronization processing comprising a filtering processing (MFL) including a determination on the fly in the time domain of a limited number of coefficients of a predictive filter from an autoregressive model of a channel digital signal (SNC) coming from the said analog/digital conversion and a filtering on the fly of the channel digital signal in the time domain by a digital finite impulse response filter whose coefficients are those of the predictive filter, and a detection of at least one indication (IND) allowing at least one location in the said frame structure to be identified, using the filtered channel digital signal (SNF) and a reference signal (SREF).

2. Method according to Claim 1, in which each symbol comprises a cyclical prefix and the number of coefficients of the filter is less than or equal to a limiting number around three quarters of the length of the cyclical prefix expressed in number of samples.

3. Method according to either of Claims 1 and 2, in which the coefficients of the predictive filter are calculated at a processing frequency in the range between 2 and 5 times the maximum frequency of the said channel digital signal (SNC).

4. Method according to one of the preceding claims, in which the said determination on the fly of the said coefficients and the said filtering on the fly comprise an organization (70) of the samples of the said digital signal into successive groups of samples (GR), a determination (71) of a current block of coefficients using the current group of samples, and an application (72) to the said current group of the finite impulse response filter having the said current block of coefficients so as to obtain a filtered current group of samples (GRF).

5. Method according to one of the preceding claims, in which each frame comprises a preamble sequence (PRM) comprising known symbols and preceding the remaining part (HD, PLD) of the frame, and the filtering processing is applied at least for detecting the said at least one indication within the preamble sequence of at least one frame.

6. Method according to Claim 5, in which the filtering processing is applied at least for detecting the said at least one indication (IND) within the preamble sequence of each frame.

7. Method according to one of the preceding claims, furthermore comprising, after the detection of the said at least one indication, a verification (MVRF) of the presence or of the absence of the said noise signal based on at least one symbol of the unfiltered useful signal.

8. Method according to Claim 7, in which the said verification comprises a direct Fourier transform processing (90) on the said at least one symbol (SYNCP) and an analysis (91) of the power of each carrier.

9. Method according to either of Claims 7 and 8 taken in combination with either of Claims 5 and 6, in which the said verification is carried out on at least one symbol (SYNCP) of the preamble sequence.

10. Method according to Claim 9, furthermore comprising a processing of the said remaining part of each frame and in which, in the case of absence of the noise signal, the processing (MTRS) of the said remaining part of the frame is carried out on the unfiltered channel digital signal.

11. Method according to Claim 9, in which each symbol comprises modulation coefficients respectively associated with the said carriers, and the method furthermore comprises a processing of the remaining part (MTRS) of the frame carried out in the case of the presence of the said noise signal on the filtered channel digital signal and comprising a direct Fourier transform processing, a de-mapping processing supplying a value of the said modulation coefficient for each carrier, and a determination of a confidence indicator of the said value for each modulation coefficient and a forcing to zero of the confidence indicators of the modulation coefficients associated with the carriers whose frequencies correspond to those of the noise signal.

12. Method according to Claim 11, in which the values of the coefficients of the filter are frozen during the processing of the remaining part of the frame.

13. Method according to one of the preceding claims, in which the useful signal is a signal modulated according to an OFDM modulation.

14. Method according to one of the preceding claims, in which the transmission channel is an electrical power line (LE) and the useful signal is a signal carried by power line communications.

15. Receiver, comprising an input stage (ET1) designed to be connected to a transmission channel (LE) and configured for delivering a channel analog signal (SAC) coming from the transmission channel, the channel analog signal being able to comprise a useful signal (SU) modulated on a sub-set from a set of available carriers, carrying at least one frame of symbols according to a frame structure and which could be affected by noise from at least one noise signal (SB) in a narrow band, an analog/digital conversion stage (CAN) for performing an analog/digital conversion of the channel analog signal and a processing stage (ET2) comprising filtering means (MFL) including a calculation module (MCL) configured for determining on the fly a limited number of coefficients of a predictive filter from an autoregressive model of a channel digital signal (SNC) coming from the analog/digital conversion stage, a digital finite impulse response filter (FIR) whose coefficients are those of the predictive filter, for carrying out a filtering on the fly of the channel digital signal in the time domain and detection means (MSYNC) configured for detecting at least one indication (IND) allowing at least one location in the said frame structure to be identified, using the filtered digital signal (SNF) and a reference signal (SREF).

16. Receiver according to Claim 15, in which each symbol comprises a cyclical prefix and the number of coefficients of the filter is less than or equal to a limiting number around three quarters of the length of the cyclical prefix expressed in number of samples.

17. Receiver according to either of Claims 15 and 16, in which the calculation module (MCL) is configured for calculating the coefficients of the predictive filter at a processing frequency in the range between 2 and 5 times the maximum frequency of the said channel digital signal.

18. Receiver according to one of Claims 15 to 17, in which the filtering means comprise organizing means (MGR) configured for grouping samples of the said channel digital signal into successive groups of samples, the calculation module (MCL) is configured for determining a current block of coefficients using the current group of samples, and the digital filter (FIR) is configured for receiving the said current group of samples at the input so as to deliver a filtered current group of samples.

19. Receiver according to one of Claims 15 to 18, in which each frame comprises a preamble sequence (PRM) comprising known symbols and preceding the remaining part of the frame, and the processing stage (ET2) comprises control means (MC, MUX) configured for delivering the said channel digital signal to the filtering means at least so that the detection means detect the said at least one indication within the preamble sequence of at least one frame.

20. Receiver according to Claim 19, in which the control means (MC, MUX) are configured for delivering the said channel digital signal to the filtering means at least so that the detection means detect the said at least one indication within the preamble sequence of each frame.

21. Receiver according to either of Claims 19 and 20, furthermore comprising verification means (MVRF) configured for carrying out, after the detection of the said at least one indication (IND), a verification of the presence or of the absence of the said noise signal based on at least one symbol of the unfiltered useful signal.

22. Receiver according to Claim 21, in which the verification means comprise a direct Fourier transform stage (MTFD) configured for performing a direct Fourier transform processing on the said at least one symbol and means of analysis (MAL) configured for carrying out an analysis of the power of each carrier.

23. Receiver according to either of Claims 21 and 22 taken in combination with either of Claims 19 and 20, in which the verification means (MVRF) are configured for carrying out the said verification on at least one symbol of the preamble sequence.

24. Receiver according to Claim 23, in which the processing stage (ET2) furthermore comprises additional processing means (MTRS) configured for carrying out a processing of the said remaining part of each frame and, in the case of absence of the noise signal, the control means (MC, MUX) are configured for delivering the said remaining part of the frame directly to the additional processing means (MTRS) without going through the filtering means (MFL).

25. Receiver according to Claim 23, in which, each symbol comprising modulation coefficients respectively associated with the carriers, the processing stage furthermore comprises additional processing means configured for carrying out a processing of the said remaining part of each frame, the additional processing means (MTRS) comprising a direct Fourier transform stage (MTFD), a de-mapping means (DMP) supplying for each carrier a value of the said modulation coefficient and a module (MCSM) able to determine, for each modulation coefficient, a confidence indicator for the said value, and forcing means (MFC) configured for, in the case of the presence of the said noise signal, forcing to zero confidence indicators of the modulation coefficients associated with the carriers whose frequencies correspond to those of the noise signal.

26. Receiver according to Claim 25, in which the control means (MC) are configured for disabling the module (MCL) for calculating the coefficients of the filter during the processing of the said remaining part of the frame.

27. Receiver according to one of Claims 15 to 26, in which the useful signal is a signal modulated according to an OFDM modulation.

28. Receiver according to one of Claims 15 to 27, in which, the transmission channel being an electrical power line (LE), the useful signal is a signal carried by power line communications.

## FIG.1

données → ENC → INTL → MP → MTFI → MCP → CNA → ETA → SU
LE

EP 3 073 695 B1

## FIG.2

MTFI

ENS { SNS { 0 ... 23 / F1 ... 58 / F2 ... 255

IFFT

FIG.3

# FIG.4

# FIG.5

# FIG.6

# FIG.7

## FIG.8

MFL

| MCL | MGR |
|-----|-----|
| FIR | |

## FIG.9

```
      ┌─────────────────────┐
      │  SYNCP non filtré   │
      └─────────────────────┘
                 │
                 ▼
      ┌─────────────────────┐
      │        FFT          │──── 90
      └─────────────────────┘
                 │
                 ▼
      ┌─────────────────────┐
      │     Analyse de      │──── 91
      │     puissance       │
      └─────────────────────┘
                 │
                 ▼
```

┌──────────────┐  non  ◇ >TH ? ◇  oui  ┌──────────────┐
│  Absence SB  │◀──────         ──────▶│  Présence SB  │
└──────────────┘                       └──────────────┘
                        92

## FIG.10

MTFD    MTRS

MCPR → FFT → DMP → MCSM

IND

MFC

BS

CRC ← DCD ← DINTL

**EP 3 073 695 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2003063596 A

**Littérature non-brevet citée dans la description**

• **BRIAN MICHAEL DONLAN.** *Ultra-wideband Narrowband Interference Cancellation and Channel Modeling for Communications,* 31 Janvier 2005